# EUROPÄISCHE PATENTSCHRIFT

(11) **EP 0 477 221 B1**
(45) Veröffentlichungstag und Bekanntmachung des Hinweises auf die Patenterteilung: **24.11.1993**
(21) Anmeldenummer: 90908936.9
(22) Anmeldetag: 01.06.1990
(51) Int. Cl.: B60T 8/50, B60T 8/48

(54) **BLOCKIERGESCHÜTZTE, HYDRAULISCHE BREMSANLAGE**
ANTILOCK HYDRAULIC BRAKING SYSTEM
SYSTEME HYDRAULIQUE DE FREINAGE A ANTI-ENRAYAGE

(30) Priorität: 17.06.1989 DE 3919842; 06.10.1989 DE 3933396; 23.11.1989 DE 3938734
(43) Veröffentlichungstag der Anmeldung: 01.04.1992
(73) Patentinhaber: ITT Automotive Europe GmbH, 60488 Frankfurt (DE)
(72) Erfinder: BURGDORF, Jochen, D-6050 Offenbach-Rumpenheim (DE); REINARTZ, Hansdieter, D-6000 Frankfurt am Main 50 (DE); STEFFES, Helmut, D-6234 Hattersheim 3 (DE); OCVIRK, Norbert, D-6050 Offenbach-Rumpenheim (DE); VOLZ, Peter, D-6100 Darmstadt (DE); WEISE, Lutz, D-6500 Mainz (DE); FENNEL, Helmut, D-6232 Bad Soden (DE); WUPPER, Hans, D-6382 Friedrichsdorf 2 (DE); BLECKMANN, Hans-Wilhelm, D-6350 Bad Nauheim 3 (DE); BECK, Erhard, D-6290 Weilburg (DE); DINKEL, Dieter, D-6239 Eppstein (DE); HAUPT, Karlheinz, D-6534 Gau-Algesheim (DE)
(86) Internationale Anmeldenummer: EP9000874
(87) Internationale Veröffentlichungsnummer: WO9015738

(56) Entgegenhaltungen:
- EP-A- 0 253 157
- DE-A- 1 453 663
- DE-A- 1 938 708
- DE-A- 1 938 708
- DE-A- 2 030 385
- DE-A- 3 505 410
- DE-A- 3 734 903
- DE-A- 3 739 915
- DE-A- 3 936 697
- FR-A- 2 145 560
- FR-A- 2 176 105
- GB-A- 2 101 245
- GB-A- 2 101 245
- GB-A- 2 186 647
- US-A- 3 829 166
- US-A- 3 829 166
- US-A- 4 099 793

## Beschreibung

Die Erfindung bezieht sich auf eine blockiergeschützte hydraulische Bremsanlage gemäß dem Oberbegriff des Anspruchs 1.

Eine derartige Bremsanlage ist aus der US-A-3829 166 bekannt.

Als Drosselventil ist ein elektromagnetisch betätigtes-Ventil vorgesehen, das mittels einer Steuerelektronik geschaltet wird. In der Grundstellung ist das Ventil offen und gibt die Bremsleitung frei. In der erregten Stellung wird eine Querschnittsverengung in die Bremsleitung geschaltet, so daß der Druckmittelstrom gedrosselt ist.

Aus der GB-A- 21 01 245 ist eine Bremsanlage des gleichen Typs beschrieben, bei der das Drosselventil hydraulisch geschaltet wird. Als Schaltdruck ist der Druck im Druckmittelsammler vorgesehen, der in dieser Anlage als Niederdruckspeicher ausgebildet ist.

Die Bremsanlage gemäß der US-A hat den Nachteil, daß ein teures Magnetventil und zusätzliche Treiber in der Elektronikeinheit vorzusehen sind.

Die Bremsanlage gemäß der GB-A hat den Nachteil, daß das Hydraulikventil nur verzögert schaltet. Damit ist nicht gewährleistet, daß schneller Druckabbau erfolgen kann.

Mit der Erfindung soll daher die Aufgabe gelöst werden, eine blockiergeschützte hydraulische Bremsanlage zu schaffen, die nur eine geringe Zahl von elektromagnetisch betätigten Ventilen aufweist und darüberhinaus einen schnellen Druckabbau gewährleistet.

Die Aufgabe wird mit den Mitteln gelöst, die im kennzeichnenden Teil des Anspruchs 1 genannt sind, insbesondere dadurch, daß dem Drosselventil eine auf eine Druckänderung in der Radbremse ansprechendes Schaltorgan zugeordnet wird.

Um gegebenenfalls den Druck in der Radbremse unabhängig von der Drosselung durch das Drosselventil schnell absenken zu können, ist dem Drosselventil ein Rückschlagventil parallel geschaltet, das zum Hauptzylinder hin öffnet. Wird nun der Druck im Hauptzylinder gesenkt, wird die Druckminderung über das Rückschlagventil am Drosselventil vorbei an die Radbremse weitergegeben.

In einfacher Weise kann die erfinderische Idee nun mit einer sogenannten offenen Bremsanlage verknüpft werden. Offene Bremsanlage bedeutet, daß der Druckmittelsammler ein Vorratsbehälter ist, der zur Atmosphäre hin offen ist und der bei nichtbetätigtem Hauptbremszylinder mit der Arbeitskammer des Hauptbremszylinders verbunden ist.

Eine ständige Kopplung des Pumpenkolbens mit seinem Exzenter bewirkt, daß mit Beginn einer Bremsschlupfregelung sofort Druckmittel gefördert werden kann, ohne daß zunächst Druckmittel aus einer Radbremse abgelassen werden muß.

Des weiteren ist die Erfindung leicht dahingehend zu erweitern, daß mit der vorgeschlagenen Bremsanlage auch der Antriebsschlupf begrenzt werden kann. Dazu müssen die Bremsleitungen sperrbar sein, so daß das Druckmittel, das von den Pumpen während einer Antriebsschlupfregelung gefördert wird, nicht über dem Hauptbremszylinder entweichen kann.

Bei einer zweikreisigen Bremsanlage, bei der in einem Kreis sowohl die Bremsen von angetriebenen als auch nicht angetriebenen Rädern vorhanden sind, muß die Zweigleitung der Bremsleitung zu den angetriebenen Rädern oberhalb des Sperrventils abzweigen.

Besonders vorteilhaft ist es, wenn ein Schaltorgan vorgesehen ist, das eine Betätigungsstange aufweist, an der ein erster Trennkolben ausgebildet ist. Dieser teilt das Gehäuse in zwei Kammern, wobei ein Druck in der Schaltkammer das Drosselventil in zweite Schaltstellung schaltet und ein Druck in der Rückstellkammer das Drosselventil in die erste Schaltstellung bringt.

Wenn nun die Rückstellkammer ungedrosselt mit der Radbremse verbunden ist und die Schaltkammer über eine Drossel an die Radbremse anschließt, so ergibt sich der folgende Effekt:

Wenn durch Öffnen des Auslaßventils der Druck in der Radbremse plötzlich abgebaut wird, so wird die Druckänderung in der Rückstellkammer sofort wirksam, während sie in der Schaltkammer wegen der Drossel nur verzögert wirksam wird. Dadurch stellt sich ein Druckgefälle am Trennkolben ein, der das Drosselventil in die zweite Schaltstellung schaltet.

Um sicherzustellen, daß das Drosselventil während einer Regelung in der zweiten Schaltstellung verbleibt, kann als weiterer Steuerdruck der Pumpendruck vorgesehen werden. Dieser hält dann das Drosselventil in der zweiten Schaltstellung auch dann, wenn sich der Druck in der Schaltkammer und in der Rückstellkammer angleicht.

Eine weitere Schaltungsmöglichkeit, die ein schnelles Umschalten des Drosselventils mit Beginn einer Regelung gewährleistet, wird im folgenden beschrieben. Die Grundidee besteht darin, daß bei geöffnetem Auslaßventil der Radbremsdruck auf das Drosselventil einwirkt und das Drosselventil umschaltet.

Hierdurch ist bei entsprechender erfindungsgemäßer Ventilanordnung eine verblüffend einfache sowie funktionssichere hydraulische Schaltung der Bremsanlage gegeben, die über die konventionellen Anforderungen hinaus einen verblüffend einfachen ABS-/ASR-Regelmodus ermöglicht.

Das Drosselventil ist derart konzipiert, daß es in seiner Grundstellung, die beispielsweise über eine Feder ansteuerbar ist, den Durchfluß in der Hauptdruckleitung geöffnet hält, so daß unabhängig von der pumpen- oder hauptzylinderseitigen Volumeneinspeisung zur Radbremse eine hydraulische Verbindung zur Bremsenbetätigung ermöglicht ist. Das der Radbremse zugeordnete Auslaßventil ist aus Funktions- wie auch aus Sicherheitsgründen in seiner Grundstellung geschlossen, um ein unbeabsichtigtes Rückströmen zum Vorratsbehälter auszuschließen.

Erst bei elektromagnetischer Erregung des Auslaßventils öffnet dieses den Rückstrom zum Vorratsbehälter, wobei auf überaschend einfache Weise über den als hydraulischen Steuerstrom wirkenden Rückstrom das Einlaßventil umschaltet, so daß das Drosselventil den Volumenstrom in der Bremsleitung drosselt sowie gleichzeitig die Rücklaufleitung freigibt.

Durch die Ausführung des Einlaßventils als schaltbares Drosselventil ist in Abhängigkeit von der Taktfrequenz des Auslaßventiles auf ausgesprochen unkomplizierte Weise die Druckhaltephase während des ABS-/ASR-Betriebes in guter Annäherung an die elektromagnetische Einlaßventil-Steuerung möglich. Weiterhin sorgt die erfindungsgemäße hydraulische Ansteuerung des Drosselventils für ein verzögerungsfreies Schalten in die Blendenposition, wodurch das Durchfallen des Bremspedales verhindert ist.

Der Erfindungsgedanke soll im folgenden anhand mehrerer Ausführungsbeispiele, dargestellt in 10 Figuren, näher erläutert werden.

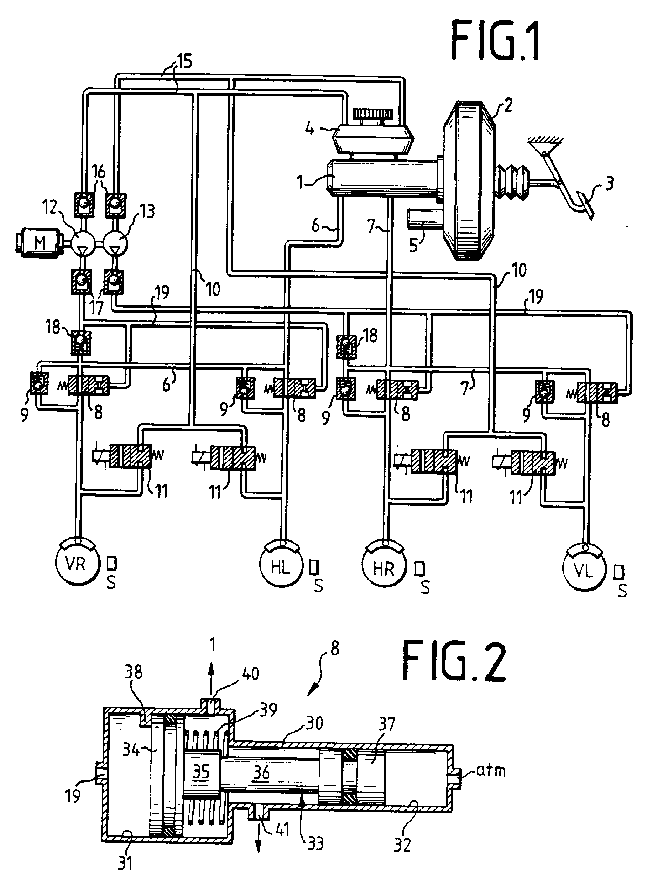

Zunächst sei auf die Figur 1 Bezug genommen.

Die Bremsanlage besteht aus einem Hauptbremszylinder 1, dem ein Unterdruckbremskraftverstärker 2 vorgeschaltet ist. Zum Betätigen der Bremsanlage wird ein Pedal 3 niedergetreten, so daß die verstärkten Pedalkräfte auf den Hauptbremszylinder 1 einwirken. Dem Hauptbremszylinder 1 zugeordnet ist ein Vorratsbehälter 4, der in bekannter Weise mit den Arbeitskammern des Hauptbremszylinders in Verbindung steht, solange das Bremspedal nicht betätigt ist. Bei dem hier beschriebenen Bremsdruckgeber handelt es sich um übliche Geräte, die gegenüber dem Stand der Technik keine Besonderheiten aufweisen.

Mit dem Unterdruckbremskraftverstärker 2 ist ein Wegschalter 5 verbunden, der den Hubweg des Verstärkertellers des Unterdruckbremskraftverstärkers 2 ermitteln kann. Die Signale des Wegschalters 5 können zur Pumpensteuerung und zur Positionierung des Pedals während einer Bremsschlupfregelung verwendet werden.

Der Hauptbremszylinder 1 steht über eine erste Bremsleitung 6 und einer zweiten Bremsleitung 7 mit den Radbremsen in Verbindung. Dabei wird ein erster Bremskreis gebildet von den Radbremsen vorne rechts (VR) und den Radbremsen hinten (HL), während ein zweiter Bremskreis von den Radbremsen hinten rechts (HR) und den Radbremsen vorne links (VL). In jeder Zweigleitung der Bremsleitungen ist ein Drosselventil 8 eingefügt, das zwei Schaltstellungen aufweist. Bei der ersten Schaltstellung besteht eine freie, ungedrosselte Verbindung zwischen dem Hauptbremszylinder 1 und der jeweiligen Radbremse. Schaltet das Drosselventil um, so wird in die Zweigleitung der Bremsleitung eine Drossel eingefügt.

Parallel zum Drosselventil 8 ist ein Rückschlagventil 9 geschaltet, das zum Hauptbremszylinder 1 hin öffnet. Jede Radbremse steht weiterhin über eine Rücklaufleitung 10 mit dem Vorratsbehälter 4 in Verbindung. Die Zweigleitungen dieser Rücklaufleitung verfügen über je ein Auslaßventil 11, das elektromagnetisch betätigt wird. In der Ruhestellung des' Ventils ist die jeweilige Zweigleitung der Rücklaufleitung 10 gesperrt. Sobald der Betätigungsmagnet des Auslaßventils von einem Strom durchflossen wird, schaltet das Ventil in die Offenstellung.

Jeder Bremsleitung 6,7 ist eine Pumpe 12,13 zugeordnet. Die Pumpen werden von einem gemeinsamen Motor M angetrieben. Ihre Saugseiten stehen über Saugleitungen 15 mit dem Vorratsbehälter 4 in Verbindung. Jede Saugleitung weist ein Saugventil 16 auf, das zum Vorratsbehälter 4 hin sperrt. Die Druckseiten der Pumpen stehen über eine Druckleitung 14 mit jeweils einer Bremsleitung 6,7 in Verbindung. In die Druckleitung ist ein Druckventil 17 eingefügt, das zur Bremsleitung hin öffnet. Dem Druckventil 17 ist ein weiteres Saugventil 16 nachgeschaltet, wobei zwischen dem Druckventil 17 und dem Saugventil 16 die Steuerleitung 19 zum Drosselventil 8 abzweigt. Das Saugventil 16 bewirkt, daß bei einer nicht schlupfgeregelten Bremsung der Hauptzylinderdruck nicht in der Steuerleitung 19 wirksam wird. Es wird damit vermieden, daß das Drosselventil 8 während einer normalen Bremsung in die Drosselposition schaltet.

Den Rädern sind Sensoren "S" zugeordnet, die die Winkelgeschwindigkeit der Räder erfassen.

Eine mögliche Ausführungsform des Drosselventils ist in Fig. 2 wiedergegeben. In einer Stufenbohrung 31,32 in einem Gehäuse 30 ist ein Stufenkolben 33 geführt. Er besteht aus vier Teilen, wobei ein erster Teil 34 dichtend in der größeren Stufe 31 der Stufenbohrung geführt ist. Ein zweiter Teil 37 ist dichtend in der kleineren Stufe 32 der Stufenbohrung ge- führt. Zwischen dem ersten und dem zweiten Teil befindet sich im Anschluß an den ersten Teil ein zweites Teil 35, der einen Durchmesser aufweist, der wenig kleiner ist als der Durchmesser der kleineren Stufe 32 der Stufenbohrung. Zwischen dem dritten und dem zweiten Teil befindet sich ein Teil 36, dessen Durchmesser deutlich kleiner ist als der Durchmesser der kleineren Stufe 32. Der Kolben 33 wird mittels einer Feder 39 an einem Anschlag 38 gehalten, wobei in der so definierten Position des Stufenkolbens 33 der dritte Teil 35 sich noch im Bereich der größeren Stufe 31 befindet.

An den Raum, der vom ersten Kolbenteil 34 begrenzt ist und auf der dem zweiten Kolbenteil 37 gegenüberliegenden Seite liegt, ist eine Steuerleitung 19 angeschlossen. Der Ringraum in der größeren Stufe der Bohrung ist an den Hauptbremszylinder 1 angeschlossen (Anschluß 40), während der Ringraum in der kleineren Stufe 32 der Stufenbohrung an eine Radbremse anschließt (Anschluß 41).

In der dargestellten Position des Stufenkolbens 33 besteht eine ungedrosselte Verbindung zwischen dem Hauptbremszylinder 1 und der Radbremse. Sobald in der Steuerleitung 19 ein Druck ansteht, wird der Stufenkolben 33 gemäß der Darstellung nach rechts in die kleinere Bohrung 32 hineingeschoben. Der dritte Kolbenteil 35 befindet sich nun in der kleineren Stufe, wobei der Ringspalt zwischen dem Kolbenteil 35 und der Wandung der kleineren Bohrung 32 so bemessen ist, daß die Druckmittelverbindung zwischen dem Hauptbremszylinder 1 und der Radbremse gedrosselt ist.

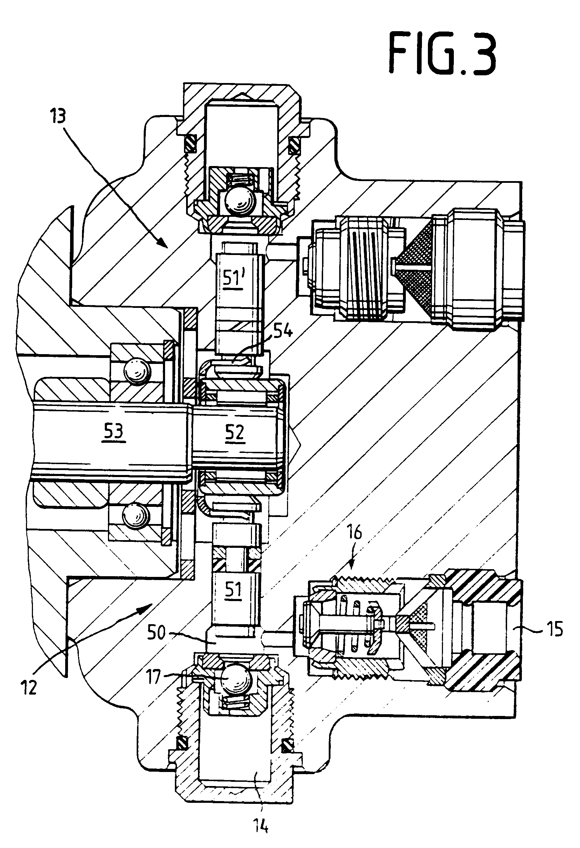

Eine mögliche Ausführungsform der Pumpe ist in der Fig. 3 dargestellt. Es handelt sich um eine Doppelkolbenpumpe mit zwei Pumpenkolben 51,51'. Diese werden von einem gemeinsamen Exzenter 52 angetrieben. Der Pumpenraum 50 steht über ein Saugventil 16 mit der Saugleitung 15 und über ein Druckventil (17) mit der Druckleitung 14 in Verbindung.

Der Exzenter 52 ist an die Antriebswelle 53 angeformt. Wichtig ist, daß die Kolben 51,51' mittels eines Koppelringes 54 stets in Anlage an den Exzenter gehalten werden, so daß unabhängig von der Befüllung der Pumpe stets eine Zwangshubbewegung der Kolben 51,51' erfolgt.

Die Bremsanlage arbeitet nach dem folgenden Schema.

Bei einer nichtgeregelten Bremsung ist das Auslaßventil 11 gesperrt und das Drosselventil in der nichtgedrosselten Position. Der Motor M ist ausgeschaltet. Es besteht somit eine ungedrosselte Verbindung zwischen dem Hauptbremszylinder 1 und den jeweiligen Radbremsen. Bei Niedertreten des Pedals 3 können die Radbremsen mit Druck beaufschlagt werden. Die Steuerleitungen 19 sind drucklos, da die Rückschlagventile 18 verhindern, daß der Hauptzylinderdruck in den Steuerleitungen 19 wirksam wird.

Wird nun mittels Sensoren festgestellt, daß eines der Räder zu blockieren droht, so schaltet die Anlage in den Antiblockier- oder Regelmodus. Dieser beinhaltet, daß das Auslaßventil 11 des blockiergefährdeten Rades geöffnet und an den Motor M eine Spannung gelegt wird, so daß die Pumpen 12,13 zu fördern beginnen. Dadurch entsteht am Ausgang der Pumpe vor dem Saugventil 16 ein Druck, der auch in der Steuerleitung 19 wirksam wird und das Drosselventil 8 umschaltet. Umschalten bedeutet, daß der Stufenkolben 33 verschoben wird und so eine Drosselwirkung hervorgerufen wird. Die Pumpen 12,13 fördern nun über die Drossel im Drosselventil 8 zu den Radbremsen. Wird der Öffnungsquerschnitt der Auslaßventile 11 so gewählt, daß mehr Druckmittel in den Vorratsbehälter 4 abgelassen wird, als über die Drossel des Drosselventils 8 zugeführt wird, so erfolgt eine Druckabsenkung in der jeweiligen Radbremse. Sobald das Auslaßventil geschlossen wird, erfolgt ein Druckaufbau, da das von den Pumpen 12,13 zugeführte Druckmittel eine Druckerhöhung bewirkt.

Durch ein getaktetes Ansteuern der Auslaßventile 11 läßt sich sogar eine Druckhaltephase realisieren. Die Druckmittelmenge, die von der Pumpe zugeführt wird, entspricht genau der Druckmittelmenge, die über das Auslaßventil wieder in den Vorratsbehälter abgelassen wird. Durch Takten des Ventils 11 lassen sich auch verschiedene Druckauf- bzw. -abbaugeschwindigkeiten realisieren.

Da lediglich das Auslaßventil 11 elektromagnetisch betätigt werden muß, während das "Einlaßventil" hydraulisch betätigt wird, kann der elektronische Aufwand zum Ansteuern der Regelventile deutlich gemindert werden.

Wird während einer Druckregelung der Druck im Hauptzylinder gesenkt und zwar unter den Wert, der in der Radbremse eingeregelt worden ist, so fließt Druckmittel aus der Radbremse über das Rückschlagventil 9 zum Hauptbremszylinder 1 zurück. Trotz des eingeschalteten Drosselventils 8 kann daher eine schnelle Druckabsenkung erfolgen, wenn dies vom Fahrer des Fahrzeuges gewünscht wird.

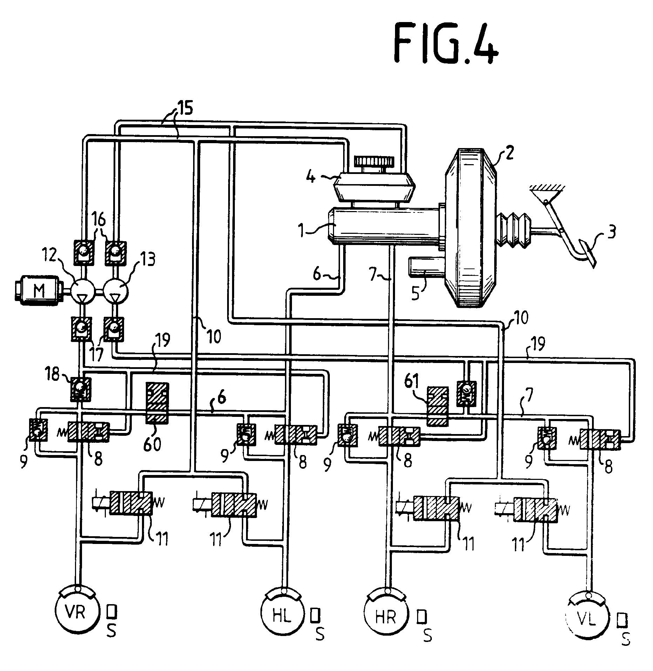

In der Fig. 4 ist eine hydraulische Schaltung dargestellt, mit der unabhängig vom Betätigen des Pedals ein Druck in den Bremsleitungen 6,7 aufgebaut werden kann, so daß eine Antriebsschlupfregelung durchgeführt werden kann. Dazu ist in jeder Bremsleitung 6,7 ein ASR-Ventil 60,61 eingefügt, das elektomagnetisch betätigt wird. Diese Ventile sind in der Ruheposition offen und schalten bei Erregung in die Sperrposition. Im Ausführungsbeispiel wird angenommen, daß die Räder der Vorderachse angetrieben werden. Die ASR-Ventile 60,61 sind daher so in die Bremsleitung eingefügt, daß die Bremsleitungszweige zu den nichtangetriebenen Rädern der Hinterachse zwischen dem Hauptbremszylinder 1 und dem ASR-Ventil 60,61 abzweigen. Die Druckleitungen 14 münden unterhalb der ASR-Ventile 60,61 in die Bremsleitung. Im Antriebsschlupfregelmodus sind die Pumpen 12,13 nur an die Radbremsen der Räder der Vorderachse angeschlossen. Durch Öffnen und Schließen des Auslaßventils kann nun in gleicher Weise wie bei einer Bremsschlupfregelung der Druck in den Radbremsen so eingestellt werden, daß das Antriebsmoment stets mit den Reibverhältnissen zwischen Fahrbahn und Reifen harmoniert. Damit wird vermieden, daß die angetriebenen Räder durchdrehen und ihre Seitenführungseigenschaften verlieren.

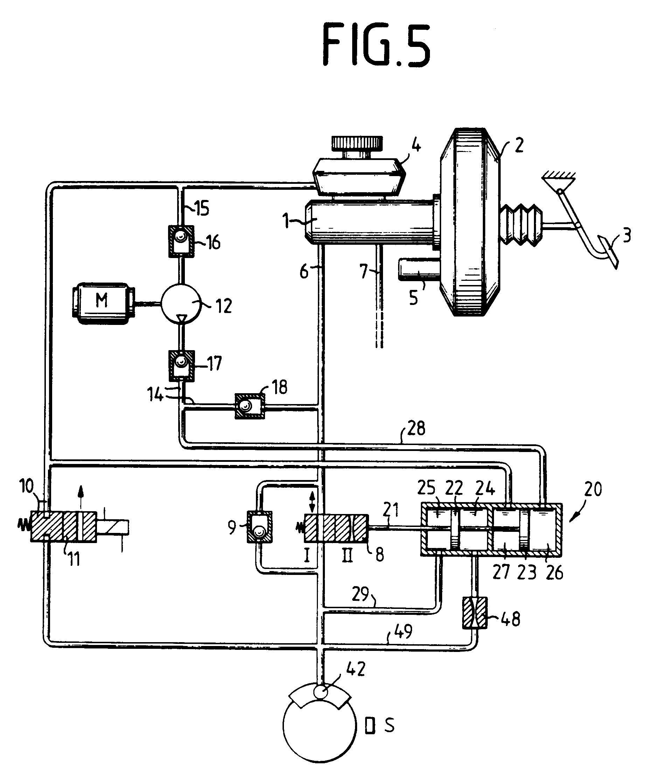

Im folgenden wird auf Figur 5 Bezug genommen. Dargestellt ist nur ein Bremskreis mit einer Pumpe 12. Der andere Kreis ist entsprechend aufgebaut.

Dem Drosselventil 8 ist ein Schaltorgan 20 zugeordnet, das eine Betätigungsstange 21 zum Betätigen des Drosselventils 8 aufweist. An die Betätigungsstange 21 angeformt und befestigt ist ein erster Trennkolben 22 und ein zweiter Trennkolben 23. Der erste Trennkolben 22 trennt zwei Kammern voneinander nämlich eine erste Schaltkammer 24 und eine Rückstellkammer 25. Die erste Schaltkammer ist so definiert, daß ein Druck in dieser Kammer das Drosselventil 8 von der ersten in die zweite Schaltposition schaltet. Ein Druck in der Rückstellkammer 25 stellt das Drosselventil 8 von der zweiten in die erste Schaltstellung.zurück. Beide Kammern 24, 25 sind über' je eine Verbindungsleitung 29, 49 mit der Radbremse 42 bzw. der Bremsleitung 6 zwischen dem Drosselventil 8 und der Radbremse 42 verbunden. In die Leitung 49 zur ersten Schaltkammer 24 ist eine Konstantdrossel 48 eingefügt. Die zweite Trennwand 23 trennt ebenfalls zwei Kammern voneinander ab, wobei die zweite Schaltkammer 26 an die Steuerleitung 28 anschließt während die andere Kammer 27 mit dem Vorratsbehälter 4 in Verbindung steht und damit stets drucklos ist.

Die Bremsanlage arbeitet nach dem folgenden Schema. Bei einer nichtgeregelten Bremsung ist das Auslaßventil 11 gesperrt und das Drosselventil 8 in der nichtdrosselnden Position. Der Motor M ist ausgeschaltet. Es besteht somit eine ungedrosselte Verbindung zwischen dem Hauptbremszylinder 1 und der Radbremse. Bei Niedertreten des Pedals 3 kann die Radbremse mit Druck beaufschlagt werden. Die Steuerleitung 28 ist drucklos, da die Rückschlagventile 18 dies verhindern.

Wird nun mittels des Sensors S festgestellt, daß das Rad zu blockieren droht, so schaltet die Anlage in den Antiblockier- oder Regelmodus. Dieser beinhaltet, daß das Auslaßventil 11 geöffnet und an den Motor M eine Spannung gelegt wird, so daß die Pumpe 12 zu fördern beginnt. Mit Öffnen des Auslaßventils 11 wird Druckmittel aus der Radbremse 42 in den Vorratsbehälter 4 abgelassen. Da das Drosselventil selbst in der ersten Schaltstellung eine leichte Drosselwirkung aufweist erfolgt durch das Ablassen von Druckmittel eine Druckabsenkung in der Radbremse. Diese wird auch in den Kammern 24 und 25 wirksam, wobei allerdings wegen der Wirkung der Drossel 48 die Druckabsenkung in der Kammer 24 verzögert erfolgt. Es entsteht ein Druckgefälle am ersten Trennkolben 22, der dazu führt, daß der Trennkolben 22 gemäß der Darstellung nach links verschoben wird und daß das Drosselventil in die zweite Schaltstellung II umschaltet.

In der Zwischenzeit hat sich auch am Ausgang der Pumpe 12 ein ausreichender Druck aufgebaut, der in der Kammer 26 wirksam wird und die Betätigungsstange 21 ebenfalls im Sinne eines Umschaltens des Drosselventils 8 in die zweite Schaltstellung belastet. Selbst wenn nun der Druck in den Kammern 24 und 25 wieder ausgeglichen ist, verbleibt das Drosselventil in der zweiten Schaltstellung, solange die Pumpe 12 fördert.

Die Pumpe 12 fördert nun über die Drossel im Drosselventil 8 zu der Radbremse. Wird der Öffnungsquerschnitt des Auslaßventils 11 so gewählt, daß mehr Druckmittel in den Vorratsbehälter 4 abgelassen wird, als über die Drossel des Drosselventils 8 zugeführt wird, so erfolgt eine Druckabsenkung in der Radbremse. Sobald das Auslaßventil geschlossen wird, erfolgt ein Druckaufbau, da das von der Pumpe 12 der Radbremse zugeführte Druckmittel eine Druckerhöhung bewirkt.

Durch ein getaktetes Ansteuern der Auslaßventile 11 läßt sich sogar eine Druckhaltephase realisieren. Die Druckmittelmenge, die von der Pumpe zugeführt wird, entspricht genau der Druckmittelmenge, die über das Auslaßventil wieder in den Vorratsbehälter abgelassen wird. Durch Takten des Ventils 11 lassen sich auch verschiedene Druckauf- bzw. -abbaugeschwindigkeiten realisieren.

Da lediglich das Auslaßventil 11 elektromagnetisch betätigt werden muß, während das "Einlaßventil" (Drosselventil) hydraulisch betätigt wird, kann der elektronische Aufwand zum Ansteuern der Regelventile deutlich gemindert werden.

Wird während einer Druckregelung der Druck im Hauptzylinder gesenkt und zwar unter den Wert, der in der Radbremse eingeregelt worden ist, so fließt Druckmittel aus der Radbremse über das Rückschlagventil 9 zum Hauptbremszylinder 1 zurück. Trotz des eingeschalteten Drosselventils 8 kann daher eine schnelle Druckabsenkung erfolgen, wenn dies vom Fahrer des Fahrzeuges gewünscht wird.

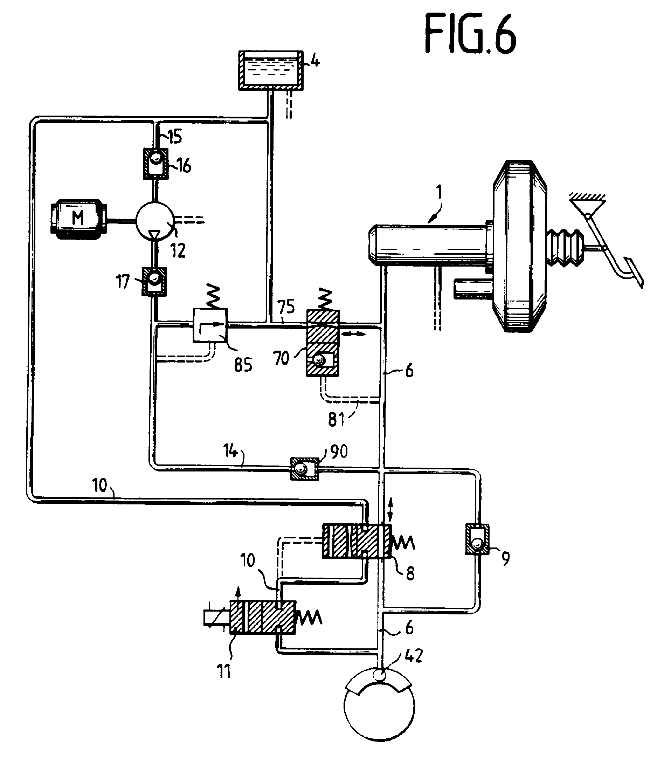

Eine weitere Möglichkeit zum Betätigen des Drosselventils 8 wird in den Figuren 6 - 10 offenbart.

Figur 6 zeigt dabei den Schaltplan für den erfindungsgemäßen antriebs- bzw. bremsschlupfgeregelten Hydraulikkreis. Zum Zwecke der besseren Überschaubarkeit der abgebildeten Bremsanlage sind lediglich die erfindungs- sowie funktionsrelevanten Elemente für eine Radbremse dargestellt und erklärt.

Zur Druckmittelversorgung der Radbremse 42 besteht über das in die Zweig- und in die Bremsleitung 75, 6 als Drosselventil 8 in seiner Grundstellung offengeschaltete 4/2 Wegeventil eine hydraulische Verbindung zwischen der Radbremse 42 und dem drucklosen Vorratsbehälter 4, in dessen Abzweig des Leitungsverbundes der Hauptbremszylinder 1 angeschlossen ist. Ein weiterer Abzweig am Vorratsbehälter 4 verknüpft die Pumpe 12 über Rückschlagventile 16, 17, 90 mit dem der Radbremse 42 vorgeschalteten Drossel- und Auslaßventil 8, 11. Auf der Druckseite der Hilfsdruckpumpe 12 stellt eine Zweigleitung 75 eine Verbindung zum Hauptbremszylinder 1 her. Diese Zweigleitung 75 nimmt ein vom Pumpendruck gesteuertes Druckbegrenzungsventil 85 sowie ein als Zentralventil 70 separat angeordnetes und vom Hauptzylinderdruck angesteuertes Drossel- und Rückschlagventil auf.

Bei nicht betätigter Bremse steht das Druckmittel vom Vor- ratsbehälter 4 über das geöffnete separat in der Zweigleitung 75 angeordnete Zentralventil 70 und das nachgeschaltete in der Grundstellung auf Durchlaß geschaltete Drosselventil 8 drucklos an der Radbremse 42 an, während das Auslaßventil 11 in seiner Grundstellung elektromagnetisch verschlossen bleibt. Die an der Radbremse 42 abgezweigte Rücklaufleitung 10 bleibt infolge des verschlossenen als 4/2 Wegeventil ausgeführten Drosselventils 8 sowie aufgrund des in seiner Grundstellung stromlos geschlossen geschalteten Auslaßventils 11 druckmittelunterbrochen. Temperaturabhängige Zu- oder Abnahmen des Druckmittelvolumens im Hydrauliksystem erfolgen sodann ungehindert über die zuvor beschriebenen festgelegten Ventilschaltstellungen in Richtung des Vorratsbehälters 4.

Bei konventioneller, pedalaktivierter Bremsung baut sich infolge der Drosselwirkung im Zentralventil 70 ein Staudruck auf, der in seiner Reaktion zum hydraulischen Umschalten des Zentralventils 70 führt, wodurch das im Zentralventil 70 integrierte Rückschlagventil in Richtung des Vorratsbehälters 4 und der Pumpe 12 sperrend wirkt. Hierdurch kann infolge der ventilseitigen Trennung der Bremsleitung 6 von der Zweigleitung 75 ein fußkraftproportionaler Druck in der Bremsleitung 6 aufgebaut werden, der sich infolge des geschlossenen Auslaßventils 11 über das Drosselventil 8, das sich in der Blendenstellung befindet, auf die Radbremse 42 fortpflanzt. Sowohl die Rücklaufleitung 10 wie auch die mit der Druckleitung 14 gekoppelte Pumpe 12 verbleiben wirkungslos.

Sobald Bremsschlupfsignale die Überbremsung des Fahrzeugrades an eine in der Abbildung nicht näher dargestellte Schlupfregelelektronik übermitteln, wird im Rahmen der ABS-Regelung der Bremsdruck bzw. das Volumen in der Radbremse 42 abgebaut, indem das Auslaßventil 11 über ein elektrisches Ausgangssignal der Steuerelektronik geöffnet wird. Ebenso sorgt die Steuerelektronik für den Anlauf der Pumpe 12, um den Bei triebsdruck von etwa 140 bar zu erzeugen. Da abhängig von Reibungseinflüssen und konstruktiven Gegebenheiten zum Aufbau des Pumpendruckes eine nicht zu vernachlässigende Zeitspanne von etwa 150 ms. den geforderten Druckaufbau verzögert, wird der Staudruck am offenen Auslaßventil 11 beim Druckabbau vor der im Drosselventil 8 integrierten Blende als Steuerdruck für das Umschalten des Drosselventils 8 genutzt, so daß im Moment des Öffnens des Auslaßventils 11 bereits auch das Drosselventil 8 schaltet und zwar unabhängig davon, wie schnell die Pumpe 12 anläuft. Somit ist auf erfinderische Weise das Durchfallen des Pedales verhindert, da nicht erst das offene Drosselventil 8 verzögert in die nahezu den Druckmittelstrom verschließende Blendenstellung hydraulisch geschaltet werden muß, während in der Zwischenzeit bereits infolge des gepulsten Auslaßventils 11 Druckmittelvolumen aus den Hauptbremszylinder 1 in die Rücklaufleitung 10 entweichen würde und dieses unerwünschterweise den Pedalhub erheblich vergrößern könnte.

Nach dem hydraulischen Umschalten des Drosselventils 8 ist infolge der in der Bremsleitung 6 wirksamen Blendenstellung des Drosselventils 8 das in Richtung der Radbremse 42 eingespeiste Druckmittelvolumen gedrosselt, während die Rücklaufleitung 10 vom Auslaßventil 11 und Drosselventil 8 freigegeben ist. Eine rasche Druckabsenkung ist gewährleistet.

Durch Pulsen bzw. Takten des Auslaßventils 11 mit definierter Regelfrequenz läßt sich sogar relativ einfach die Druckhaltephase sowie verschiedenen Druckaufbau- bzw. Druckabbaugeschwindigkeiten realisieren, ohne das Drosselventil 8 aufwendig elektronisch steuern zu müssen.

Wird der Druck im Hauptbremszylinder 1 unter den geregelten Radbremsdruck abgesenkt, so kann über das parallel zum Drosselventil 8 geschaltete Rückschlagventil 9 eine rasche Druckabsenkung in der Radbremse 42 erfolgen, da sodann die Blendenstellung des Drosselventils 8 umgangen ist.

Im ASR-Modus aktiviert die Steuerelektronik die Pumpe 12, so daß infolge der Systemdrucksteigerung in der Druck- sowie Bremsleitung 14, 6 das separat in der Zweigleitung 75 angeordnete sowie eine Blende aufweisende Zentralventil 70 infolge der Stauwirkung des Druckmittels in der Stellung des Rückschlagkörpers hydraulisch geschlossen ist. Hierdurch ist der Druckmittelrückstrom zum Vorratsbehälter 4 unterbrochen, so daß abhängig von der elektromagnetischen Ansteuerung des Auslaßventils 11 und damit auch der Folgesteuerung des Drosselventils 8 die Anfahrschlupfregelung wirksam ist.

Druckaufbau-, Druckhalte- und Druckabbauphasen lassen sich im ASR-Betrieb ebenso über das Takten des Auslaßventils 11 regeln wie im ABS-Betrieb beschrieben, so daß auf die Verwendung eines elektromagnetisch angesteuerten Drosselventil 8 verzichtet werden kann. Das Drosselventil 8 ist deshalb vorzugsweise bei geöffnetem Auslaßventil 11 über den Pumpendruck hydraulisch umzusteuern, womit der Radbremsdruck bereits von der Blendensteuerung des Drosselventils 8 geregelt ist.

Im Gegensatz zu den bekannten antriebsschlupfgeregelten Bremsanlagen kann auf die Anordnung eines speziellen ASR-Trennventils verzichtet werden, da das Rückströmen des Hilfsdruckes in den Vorratsbehälter 4 infolge der separaten Schaltungsanordnung des Zentralventiles 70 in der Zweigleitung 75 sowie dessen Pumpendruck gesteuerte Ventilschließung vermieden ist.

Das in der Zweigleitung 75 angeordnete Zentralventil 70 kann praxisgerecht in der Pumpe 12 oder im Ventilblock verbaut werden, wobei infolge der Auslagerung des Zentralventiles 70 aus dem Hauptbremszylinder 1 der Hauptbremszylinder 1 konstruktiv stark vereinfacht werden kann. Weiterhin entfallen die Schnüffellöcher und Behälteranschlüsse, wodurch eine verkürzte Baulänge des Bremsgerätes realisiert werden kann. Außerdem läßt sich der Vorratsbehälter 4 wahlweise an der Pumpe 12 oder am Ventilblock anbringen.

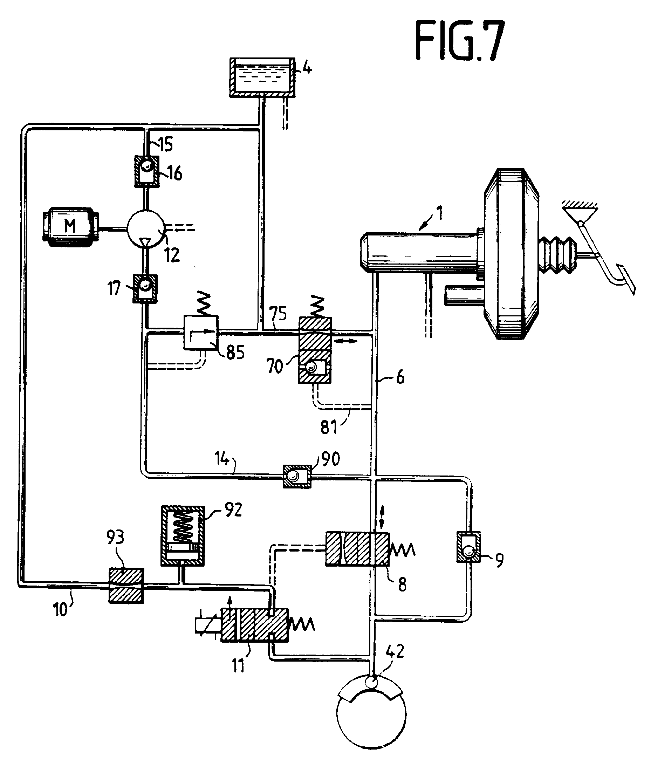

Figur 7 zeigt: eine alternative Ausführungsform der ABS-/ASR-Hydraulikschaltung, wonach unter Beibehaltung eines einfachen als 2/2 Wegeventils ausgeführten Drosselventils 8 die Druckaufbau-, -abbau- und Druckhaltephasen über in die Rücklaufleitung 10 eingefügte Schalt-, Speicher- und Drosseleinrichtung realisiert werden können, ohne daß beim Öffnen des elektromagnetisch angesteuerten Auslaßventils 11 ein Durchfallen des Pedales zu Beginn des ABS-Regelvorganges bei blendenoffenem Drosselventil 8 geschehen kann. Analog zu der in Figur 6 beschriebenen hydraulischen Ansteuerung des Drosselventils 8 über das offene Auslaßventil 11 ist dem Auslaßventil 11 in die Rücklaufleitung 10 ein Niederdruckspeicher 92 mit nachgeschalteter Blende 93 zugeordnet, wodurch bei einem relativ schnell auszuführenden Druckabbau in der Radbremse 42 das Überschußvolumen durch den Niederdruckspeicher 92 aufgenommen wird sowie die Schaltstellung des Drosselventils 8 stabilisiert ist. Der Vorhaltedruck des Niederdruckspeichers 92 liegt vorzugsweise im Bereich von 1 - 6 bar.

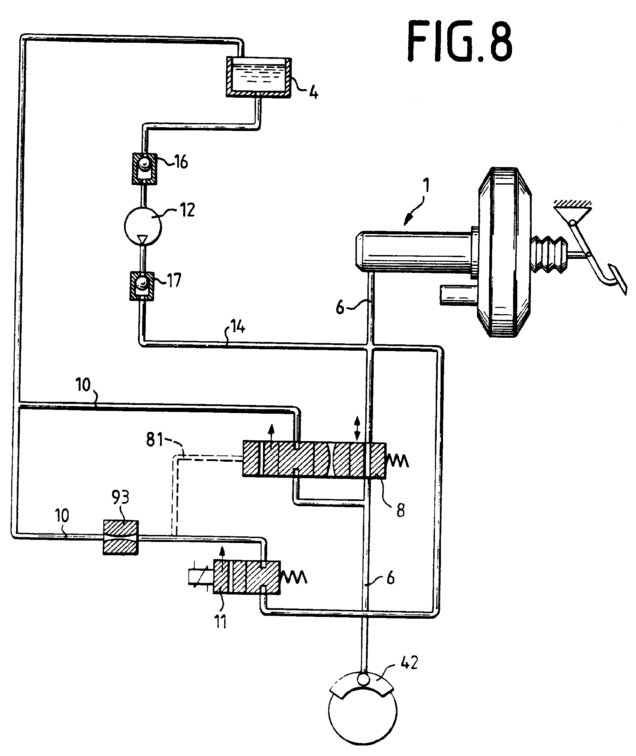

In Analogie zu den ABS-/ASR Hydraulikschaltungen gemäß Figur 6 und 7 zeigt Figur 8 eine alternative Ausführungs- sowie Anschlußform des als 4/2 Wegeventils konzipierten Drosselventils 8, dessen hydraulische Umsteuerposition über die Steuerleitung 81 abgezweigt an der Rücklaufleitung 10 zwischen dem Auslaßventil 11 und der Blende 93 erfolgt. Die in der Abbildung 8 gezeigte Schaltung ist zur prinzipiellen Veranschaulichung der funktionsrelevanten Merkmale lediglich auf den ABS-Betrieb beschränkt, jedoch ebenso wie die gezeigten Hydraulikschaltungen nach Figur 6 und 7 durch Einfügen eines Trennventils in die Bremsleitung 6 oder durch separate Anordnung eines Zentralventils im Nebenschluß zwischen Bremsleitung 6 und Pumpe 12 uneingeschränkt auf den ASR-Betrieb erweiterungsfähig.

Ohne Schlupfregelung und somit im Bereich der konventionellen Bremsenbetätigung verharrt das Drossel- sowie Auslaßventil 8, 11 in der abbildungsgemäßen Stellung gemäß Fig. 8, so daß über die Bremsleitung 6 der fußkraftproportionale Bremsdruck an der Radbremse 42 ansteht, während die Rücklaufleitung 10 vom Auslaßventil und gleichzeitig vom Drosselventil 11, 8 versperrt bleibt. Folglich verbleibt auch die zum Drosselventil 8 führende Steuerleitung 81 zunächst drucklos.

Beim Einsetzen der Brems- wie auch Anfahrschlupfregelung wird sodann in Abhängigkeit von der vom Auslaßventil 11 bestimmten Druckabbauphase in dessen Offenstellung über die nachgeschaltete Steuerleitung 81 das Drosselventil 8 abhängig vom hydraulischen Druck zwischen dem Auslaßventil 11 und der Blende 93 umgesteuert, so daß das über die Bremsleitung 6 der Radbremse 42 zufließende Druckmittel über die Blendenstellung des Drosselventil 8 gedrosselt wird. Hiebei bestimmt im Gegensatz zu den bereits beschriebenen Figuren 6 und 7 die dem Auslaßventil 11 nachgeschaltete Blende 93 die Zeitphase zur Umsteuerung den Drosselventils 8 in dessen drosselfreie Grundstellung, wodurch eine bessere Annäherung des geregelten Bremsdruckverlaufs an die gewünschte Regelkennlinie entsprechend der erfindungsgemäßen Schaltung nach Fig. 8 gelingt.

Für den in Fig. 8 dargestellten ASR-Betrieb gilt im Wesentlichen bereits das Gesagte zur Funktionsweise des Drosselventils 8 unter Bezugnahme auf die Ausführungsbeispiele nach Figur 6 und 7.

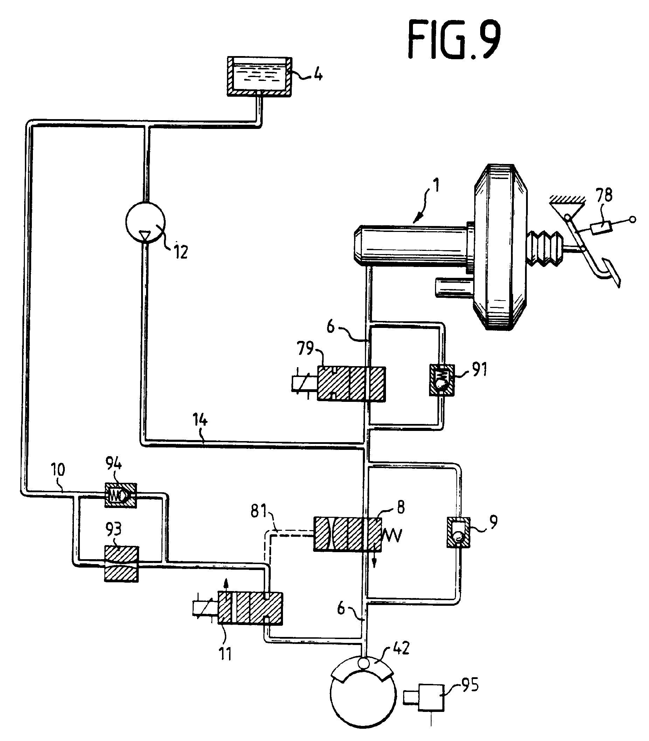

Figur 9 zeigt eine weitere Schaltungsvariante für den ABS-/ASR-Betrieb in Anlehnung an die vorhergehenden Figurenbeschreibungen, insbesondere unter Bezugnahme auf Figur 7, jedoch mit dem Unterschied, daß nach Figur 9 parallel zu der dem Auslaßventil 11 nachgeschalteten Blende 93 ein in Richtung des Auslaßventils 11 sperrend wirkendes Rückschlagventil 94 angeordnet ist, so daß bei baulicher Vereinigung der Blende 93 mit dem Rückschlagventil 94 auf einfache Weise ein Überdruckventil dargestellt ist, das die nachteiligen Einflüsse auf den Hydraulikstrom, insbesondere die Auswirkungen des Tieftemperatureinflusses auf die Viskositiät des Strömungsmediums verhindert.

Die hydraulische Schaltung nach Figur 9 zeigt einen Hauptbremszylinder 1 mit darin nicht näher abgebildeten integrierten Zentralventilen, wobei exemplarisch nur ein Radbremsregelkreis zur Funktionserläuterung dargestellt ist. Eine mit der Radbremse 42 verbundene Bremsleitung 6 nimmt vor einem die Pumpe 12 an die Druckleitung 14 anschließenden Abzweig ein Trennventil 79 auf, das in seiner Grundstellung auf Durchlaß geschaltet ist und bei elekromagnetischer Erregung im ASR-Regelzyklus das Rückströmen von Druckmittel in den Hauptbremszylinder 1 vermeidet. Parallel zum Trennventil 79 ist über ein als Rückschlagventil 91 in Richtung des Hauptbremszylinders 1 öffnendes Überdruckventil der maximale Systemdruck der Bremsanlage während der ASR-Regelung begrenzt. In bekannter und bereits ausführlich dargestellter Weise ist in Anlehnung an die vorherigen Funktionsbeschreibungen über die konventionelle Bremsung hinaus abhängig von den über Radsensoren 95 erfaßten Brems- und Anfahrschlupfsignalen eine Datenverarbeitung in der ABS-/ASR-Steuerelektronik gegeben, die unter anderem zur bereits bekannten elektromagnetischen Aktivierung des Trennventils 79 im ASR-Modus und/oder zur elektromagnetischen Ansteuerung des Auslaßventils 11 sowohl im ASR- wie auch ABS-Betrieb führt. Die Aktivierung der Pumpe 12 ist über einen hauptzylinderseitigen bzw. pedalseitig verbauten Wegsensor 78 steuerbar.

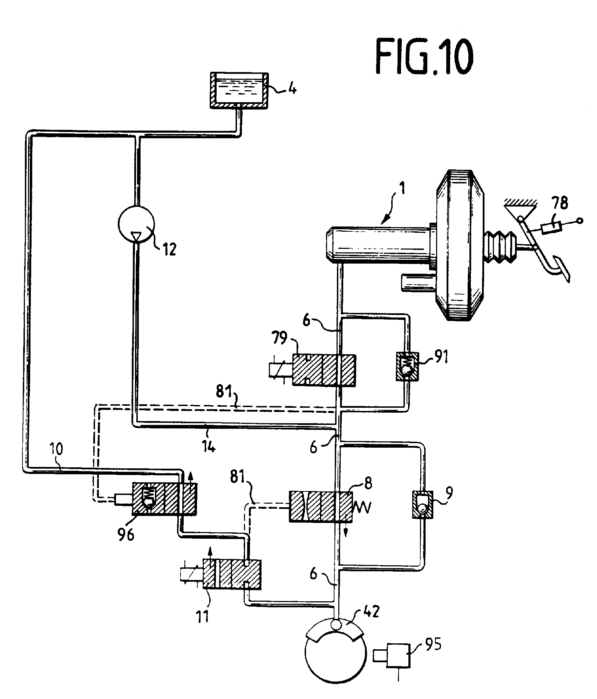

Eine ausgesprochen vorteilhafte sowie verblüffend einfach zu realisierende rasche Steuerdruckabsenkung in der Steuerleitung 81 zum hydraulischen Betätigen des Drosselventils 8 läßt sich auf erfinderische Weise gemäß Figur 10 durch den Ersatz der dem Auslaßventil 11 nachgeschalteten Blende, siehe auch hierzu Figur 7, 8, 9, durch Verwendung eines Zweistellungsventils 96 verwirklichen, da der geregelte Druck drosselfrei sofort abgebaut werden kann, wenn das Bremspedal entlastet wird. Folglich ergeben sich kurze Ansprechzeiten für das hydraulische Umsteuern des Drosselventils 8. Die Schaltung des Zweistellungsventils 96 erfolgt über eine separate zweite hydraulische Steuerleitung 81, die dem Trennventil 79 im Hauptzweig zur Bremsleitung 6 nachgeschaltet ist. Das in der Grundstellung auf ungehinderten Durchlass in Reihe in die Rücklaufleitung 10 geschaltete Zweistellungsventil 96 wird abhängig von einem in der Bremsleitung 6 herrschenden pedal- und pumpenseitigen Druckniveau hydraulisch umgesteuert, so daß durch die Wirksamkeit des Staudruck bildenden Rückschlagventils, integriert im Zweistellungsventil 96, der zum hydraulischen Umschalten des Drosselventils 8 erforderliche Steuerdruck aufgebaut werden kann. Somit stellt das nach Figur 10 in den Bremskreis geschaltete Zweistellungsventil 96 eine interessante Weiterentwicklung der hydraulischen ABS-/ASR-Schaltung gemäß Figur 9 dar.

Abschließend soll in diesem Zusammenhang auf die Bedeutung der Eliminierung der störanfälligen sowie aufwendig und damit teuer herzustellenden Ventilkomponenten hingewiesen werden, die durch die erfindungsrelevanten Merkmale vermieden sind.

### Bezugszeichen

- 1: Hauptbremszylinder
- 2: Unterdruckbremskraftverstärker
- 3: Pedal
- 4: Vorratsbehälter
- 5: Wegschalter
- 6: erste Bremsleitung
- 7: zweite Bemsleitung
- 8: Drosselventil
- 9: Rückschlagventil
- 10: Rücklaufleitung
- 11: Auslaßventil
- 12: erste Pumpe
- 13: zweite Pumpe
- 14: Druckleitung
- 15: Saugleitung
- 16: Saugventil
- 17: Druckventil
- 18: Rückschlagventil
- 19: Steuerleitung
- 20: Schaltorgan
- 21: Betätigungsstange
- 22: erster Trennkolben
- 23: zweiter Trennkolben
- 24: erste Schaltkammer
- 25: Rückstellkammer
- 26: zweite Schaltkammer
- 27: Kammer
- 28: Steuerleitung
- 29: erste Verbindungsleitung
- 30: Ventilgehäuse
- 31: Bohrung weiten Querschnitts
- 32: Bohrung engen Querschnitts
- 33: Stufenkolben
- 34: erster Kolbenteil
- 35: dritter Kolbenteil
- 36: vierter Kolbenteil
- 37: zweiter Kolbenteil
- 38: Anschlag
- 39: Feder
- 40: Hauptzylinderanschluß
- 41: Radzylinderanschluß
- 42: Radbremse
- 48: Konstantdrossel
- 49: zweite Verbindungsleitung
- 50: Pumpenraum
- 51,51': Pumpenkolben
- 52: Exzenter
- 53: Welle
- 54: Koppelring

- 60: ASR-Ventil
- 61: ASR-Ventil

- 70: Zentralventil
- 75: Zweigleitung
- 78: Wegsensor
- 79: Trennventil

- 81: Steuerleitung
- 85: Druckbegrenzungsventil
- 90: Rückschlagventil
- 91: Rückschlagventil
- 92: Niederdruckspeicher
- 93: Blende
- 94: Rückschlagventil
- 95: Radsensor
- 96: Zweistellungsventil

## Patentansprüche

1. Blockiergeschützte, hydraulische Bremsanlage für ein Kraftfahrzeug mit einem Hauptbremszylinder (1), einem Druckmittelsammler (4), mindestens einer Radbremse, die über eine Bremsleitung (6) mit dem Hauptbremszylinder (1) und über eine Rücklaufleitung (10) mit dem Druckmittelsammler (4) in Verbindung steht, einem elektromagnetisch betätigten Auslaßventil (11), das in die Rücklaufleitung (10) eingefügt ist und in seiner Ruhestellung die Rücklaufleitung (10) sperrt und in seiner Schaltstellung die Rücklaufleitung (10) freigibt, einem Drosselventil (8), das in die Bremsleitung (6) eingesetzt ist und zwei Schaltstellungen aufweist, wobei in der ersten Schaltstellung eine ungedrosselte und in der zweiten Schaltstellung eine gedrosselte Verbindung zwischen der Radbremse und dem Hauptbremszylinder (1) existiert, einer Pumpe (13), die aus dem Druckmittelsammler (4) Druckmittel ansaugt und über eine Druckleitung (14) in den Haupt- bremszylinder (1) fördert, einem Sensor zum Erfassen der Win- kelgeschwindigkeit des abzubremsenden Rades, und einer elektronischen Auswerteeinheit, die das Sensorsignal auswertet und Schaltsignale für den Pumpenantrieb und das Auslaßventil (11) erzeugt, dadurch **gekennzeichnet**, daß dem Drosselventil (8) ein Schaltorgan (20) zugeordnet ist, das auf eine Druckänderung in der Radbremse (42) anspricht und das Drosselventil (8) umschaltet.

2. Bremsanlage nach Anspruch 1, dadurch **gekennzeich****net**, daß das Schaltorgan (20) eine Betätigungsstange (21) aufweist, an der ein erster Trennkolben (22) ausgebildet ist, der ein Gehäuse in zwei Kammern (24, 25) teilt, wobei ein Druck in der einen Kammer (erste Schaltkammer 24) das Drosselventil (8) in die zweite Schaltstellung II schaltet und ein Druck in der anderen Kammer (Rückstellkammer 25) das Drosselventil in die erste Schaltstellung I bringt.

3. Bremsanlage nach Anspruch 2, dadurch **gekennzeichnet**, daß die Rückstellkammer (25) ungedrosselt und die erste Schaltkammer (24) über eine Drossel (48) an die Radbremse (42) angeschlossen sind.

4. Bremsanlage nach Anspruch 1, 2 oder 3, dadurch **gekennzeichnet**, daß das Drosselventil (8) mittels einer Steuerleitung (19) an den Ausgang der Pumpe (13) angeschlossen ist, so daß der Druck am Ausgang der Pumpe (13) das Drosselventil (8), von der ersten in die zweite Schaltstellung setzt.

5. Bremsanlage nach Anspruch 4, dadurch **gekennzeichnet**, daß an der Betätigungsstange (21) ein zweiter Trennkolben (23) ausgebildet ist, der eine mit dem Pumpenausgang verbundene zweite Schaltkammer (26) begrenzt, wobei bei einer Druckbelastung der zweiten Schaltkammer das Drosselventil (8) in die zweite Schaltstellung II geschaltet wird.

6. Bremsanlage nach Anspruch 1, dadurch **gekennzeichnet**, daß dem Drosselventil (8) ein Rückschlagventil (9) parallel geschaltet ist, das zum Hauptbremszylinder (1) hin öffnet.

7. Bremsanlage nach einem der vorhergehenden Ansprüche, dadurch **gekennzeichnet**, daß der Druckmittelsammler ein Vorratsbehälter (4) ist, der zur Atmosphäre hin offen ist, und der bei nichtbetätigtem Hauptzylinder mit der Arbeitskammer des Hauptzylinders in Verbindung steht.

8. Bremsanlage nach einem der vorhergehenden Ansprüche, dadurch **gekennzeichnet**, daß die Bremsanlage zweikreisig ausgelegt ist, wobei jedem Bremskreis die Radbremsen der diagonal am Fahrzeug gegenüberliegende Räder zugeordnet sind und jeder Bremskreis eine Pumpe (12,13) aufweist.

9. Bremsanlage nach Anspruch 8, dadurch **gekennzeichnet**, daß die Pumpen (12,13) von einem gemeinsamen Motor M angetrieben werden.

10. Bremsanlage nach Anspruch 1, dadurch **gekennzeichnet**, daß die Pumpe eine Hubkolbenpumpe (12,13) ist, deren Pumpenkolben von einem Exzenter (52) angetrieben wird, wobei der Pumpenkolben ständig in Anlage an dem Exzenter (52) gehalten ist.

11. Bremsanlage nach einem der vorhergehenden Ansprüche, dadurch **gekennzeichnet**, daß das Drosselventil (8) einen Stufenkolben (33) aufweist, der in einer entsprechenden Stufenbohrung (31,32) geführt ist, wobei der Stufenkolben (33) in seinem mittleren Bereich einen Abschnitt (35) aufweist, der in die engere Stufe (32) der Stufenbohrung einführbar ist, wobei der Spalt zwischen dem Stufenkolbenabschnitt (35) und der Wandung der engeren Stufe (32) die Drosselung des Druckmittelstromes bewirkt.

12. Bremsanlage nach einem der vorhergehenden Ansprüche, dadurch **gekennzeichnet**, daß die Bremsleitung (6,7) zwischen der Einmündung der Druckleitung (14) in die Bremsleitung und dem Hauptbremszylinder (1) sperrbar ist (ASR-Ventil 60,61).

13. Bremsanlage nach Anspruch 12, dadurch **gekennzeichnet**, daß bei einer Bremsanlage, bei der in einem Bremskreis die Bremsen von angetriebenen und nichtangetriebenen Rädern vereint sind, die Bremsleitung zu dem nichtangetriebenen Rad zwischen dem ASR-Ventil (60,61) und dem Hauptbremszylinder (1) abzweigt.

14. Anfahrschlupf- und bremsschlupfgeregelte hydraulische Bremsanlage, insbesondere für ein Kraftfahrzeug, mit einem Hauptbremszylinder (1), einem Vorratsbehälter (4), mit mindestens einer Radbremse, die über eine Hauptdruckleitung (6) mit dem Hauptbremszylinder (1) und über eine Rücklaufleitung (10) mit dem Vorratsbehälter (4) in Verbindung steht, mit einem der Radbremse zugeordneten Drosselventil (8) und einem elektromagnetisch betätigten Auslaßventil (11), das in die Rücklaufleitung (10) eingefügt ist und in seiner Ruhestellung die Rücklaufeitung (10) sperrt sowie in seiner Schaltstellung die Rücklaufleitung (10) freigibt, mit einer Pumpe (12), die aus dem Vorratsbehälter (4) Druckmittel ansaugt und dieses über eine Druckleitung (14) in den Hauptbremszylinder (1) fördert, mit einem Sensor zum Erfassen der Winkelgeschwindigkeit des abzubremsenden Rades, und einer elektronischen Auswerteeinheit, die das Sensorsignal auswertet und Schaltsignale für den Pumpenantrieb und das Auslaßventil erzeugt, wobei bei geöffnetem Auslaßventil (11) der Radbremsdruck auf das Drosselventil (8) einwirkt, so daß der Radbremsdruck das Drosselventil (8) hydraulisch umschaltet, dadurch **gekennzeichnet**, daß dem Auslaßventil (11) in Reihenschaltung in die Rücklaufleitung (10) eine Blende (93) zugeordnet ist, die die Zeitphase zur Umsteuerung des Drosselventils (8) in die drosselfreie Grundposition bestimmt.

15. Bremsanlage nach einem der Ansprüche 14, dadurch **gekennzeichnet**, daß dem Auslaßventil (11) ein Richtung der Rücklaufleitung (10) öffnendes Rückschlagventil (94) nachgeschaltet ist.

16. Bremsanlage nach Anspruch 15, dadurch **gekennzeichnet**, daß das Rückschlagventil (94) mit der Blende (93) in paralleler Schaltungsanordnung zueinander ein baulich vereinigtes Überdruckventil bildet.

17. Bremsanlage nach Anspruch 15, dadurch **gekennzeichnet**, daß das zwischen Radbremse (42) und Hauptbremszylinder (1) angeordnete Drosselventil (8) bei geschlossenem Auslaßventil (11) die Bremsleitung (6) geöffnet hält und die dem Auslaßventil (11) angegliederte Rücklaufleitung (10) sperrt.

18. Bremsanlage nach Anspruch 17, dadurch **gekennzeichnet,** daß in der vom Radbremsdruck hervorgerufenen hydraulischen Umsteuerposition das Drosselventil (8) den Volumenfluß in der Bremsleitung (6) drosselt sowie den Rückstrom in der Rücklaufleitung (10) vom Auslaßventil (11) bis zum Vorratsbehälter (4) freigibt.

19. Bremsanlage nach Anspruch 18, dadurch **gekennzeichnet**, daß das Drosselventil (8) als 4/2 Wegeventil konzipiert ist, das vorzugsweise mittels Federkraft in seiner die Bremsleitung (6) freigebenden Grundstellung verharrt, während der Rücklauf zum Vorratsbehälter (4) verschlossen ist.

20. Bremsanlage nach Anspruch 14, dadurch **gekennzeichnet**, daß die Steuerleitung (81) zur Betätigung des Drosselventils (8) an der Rücklaufleitung (10) zwischen der Blende (93) und dem Auslaßventil (11) abgezweigt ist.

21. Bremsanlage nach Anspruch 14, dadurch **gekenn****zeichnet**, daß dem Auslaßventil (11) ein vom Druck des Hauptbremszylinders (1) und der Pumpe (12) beaufschlagtes, einen Rückschlagkörper aufweisendes Zweistellungsventil (96) nachgeschaltet ist.

## Claims

1. An anti-lock hydraulic brake system for an automotive vehicle comprising a master brake cylinder (1), a pressure-fluid collecting means (4), at least one wheel brake which is in communication with the master brake cylinder (1) via a brake line (6) and with the pressure-fluid collecting means (4) via a return line (10), comprising an electromagnetically actuated outlet valve (11) which is inserted into the return line (10) and which closes said return line (10) in its inactive position and opens the return line (10) in its switch position, comprising a throttle valve (8) inserted into the brake line (6) and adopting two switch positions, with an unrestricted connection existing in the first switch position and a restricted connection existing in the second switch position between the wheel brake and the master brake cylinder (1), comprising a pump (13) taking in pressure fluid out of the pressure-fluid collecting means (4) and delivering it via a pressure line (14) into the master brake cylinder (1), comprising a sensor for ascertaining the angular velocity of the wheel to be braked, and an electronic analyzing unit analyzing the sensor signal and generating switch signals for the pump drive and the outlet valve (11),
**characterised** in that associated with the throttle valve (8) is a switching member (20) which responds to a pressure variation in the wheel brake (42) and switches the throttle valve (8) over.

2. A brake system as claimed in claim 1,
**characterised** in that the switching member (20) comprises an actuating rod (21) on which a first separating piston (22) is designed which latter separates a housing into two chambers (24, 25), wherein pressure in the one chamber (first switching chamber 24) switches the throttle valve (8) into the second switch position II, while pressure in the other chamber (resetting chamber 25) causes the throttle valve to assume the first switch position I.

3. A brake system as claimed in claim 2,
**characterised** in that the resetting chamber (25) communicates with the wheel brake (42) in an unrestricted fashion, while the first switching chamber (24) connects thereto via a throttle (48).

4. A brake system as claimed in claim 1, 2 or 3
**characterised** in that the throttle valve (8) connects to the outlet of the pump (13) by means of a control line (19) so that the pressure at the outlet of the pump (13) causes the throttle valve (8) to change over from the first into the second switch position.

5. A brake system as claimed in claim 4,
**characterised** in that a second separating piston (23) is designed on the actuating rod (21) and limits a second switching chamber (26) connected to the pump outlet, with the throttle valve (8) being switched into the second switch position II when the second switching chamber is acted upon by pressure.

6. A brake system as claimed in claim 1,
**characterised** in that a non-return valve (9) opening towards the master brake cylinder (1) is connected in parallel to the throttle valve (8).

7. A brake system as claimed in any one of the preceding claims,
**characterised** in that the pressure-fluid collecting means is a supply reservoir (4) which is open towards the atmosphere and which is in communication with the working chamber of the master cylinder when the master cylinder is not operated.

8. A brake system as claimed in any one of the preceding claims,
**characterised** in that the brake system is of dual-circuit design, each brake circuit being associated with the diagonally opposite vehicle wheels and each brake circuit comprising one pump (12, 13).

9. A brake system as claimed in claim 8,
**characterised** in that the pumps (12, 13) are driven by one joint motor M.

10. A brake system as claimed in claim 1,
**characterised** in that the pump is a piston pump (12, 13) whose pump piston is driven by an eccentric (52), the said pump piston being kept in permanent abutment on the eccentric (52).

11. A brake system as claimed in any one of the preceding claims,
**characterised** in that the throttle valve (8) comprises a stepped piston (33) which is guided in a corresponding stepped bore (31, 32), the said stepped piston (33) including in its mid-area a portion (35) which is insertable into the narrow step (32) of the stepped bore, the gap between the stepped-piston portion (35) and the wall of the narrow step (32) effecting throttling of the pressure-fluid flow.

12. A brake system as claimed in any one of the preceding claims,
**characterised** in that the brake line (6, 7) is closable (TSC-valve 60, 61) between the point where the pressure line (14) connects to the brake line and the master brake cylinder (1).

13. A brake system as claimed in claim 12,
**characterised** in that in a brake system, wherein the brakes of driven and non-driven wheels are united in one brake circuit, the brake line to the non-driven wheel branches off between the TSC-valve (60, 61) and the master brake cylinder (1).

14. A traction-slip and brake-slip controlled hydraulic brake system, in particular for an automotive vehicle, comprising a master brake cylinder (1), a supply reservoir (4), at least one wheel brake which is in communication with the master brake cylinder (1) via a main pressure line (6) and with the supply reservoir (4) via a return line (10), comprising a throttle valve (8) allocated to the wheel brake and an electromagnetically operated outlet valve (11) which is inserted into the return line (10) and which closes said return line (10) in its inactive position and opens the return line (10) in its switch position, comprising a pump (12) taking in pressure fluid out of the supply reservoir (4) and delivering it via a pressure line (14) into the master brake cylinder (1), comprising a sensor for ascertaining the angular velocity of the wheel to be braked, and comprising an electronic analyzing unit analyzing the sensor signal and generating switch signals for the pump drive and the outlet valve, wherein the wheel braking pressure acts upon the throttle valve (8), with the outlet valve (11) open, so that the wheel braking pressure switches the throttle valve (8) hydraulically over,
**characterised** in that associated with the outlet valve (11) in series arrangement in the return line (10) is a restrictor (93) which determines the period of time for switch-over of the throttle valve (8) into the unthrottled basic position.

15. A brake system as claimed in claim 14,
**characterised** in that connected downstream of the outlet valve (11) is a non-return valve (94) opening in the direction of the return line (10).

16. A brake system as claimed in claim 15,
**characterised** in that the non-return valve (94) in conjunction with the restrictor (93), in parallel configuration to each other, form a structurally united pressure relief valve.

17. A brake system as claimed in claim 15,
**characterised** in that the throttle valve (8) interposed between wheel brake (42) and master brake cylinder (1) keeps the brake line (6) open when the outlet valve (11) is closed, and shuts off the return line (10) associated with the outlet valve (11).

18. A brake system as claimed in claim 17,
**characterised** in that in the hydraulic change-over position caused by the wheel braking pressure, the throttle valve (8) throttles the volume flow in the brake line (6) and releases the return flow in the return line (10) from the outlet valve (11) to the supply reservoir (4).

19. A brake system as claimed in claim 18,
**characterised** in that the throttle valve (8) is devised as a four-way/two-position directional control valve which, preferably by means of spring force, persists in its basic position releasing the brake line (6), while the return line to the supply reservoir (4) is closed.

20. A brake system as claimed in claim 14,
**characterised** in that the control line (81) for the actuation of the throttle valve (8) is branched off from the return line (10) between the restrictor (93) and the outlet valve (11).

21. A brake system as claimed in claim 14,
**characterised** in that connected downstream of the outlet valve (11) is a two-position valve (96) acted upon by the pressure of the master brake cylinder (1) and the pump (12) and comprising a return element.

## Revendications

1. Système hydraulique de freinage antiblocage, pour véhicule automobile, comprenant un maître-cylindre de frein (1), un accumulateur d'agent de pression (4), au moins un frein de roue, qui est relié au maître-cylindre de frein (1) par une conduite de freinage (6) et à l'accumulateur d'agent de pression (4) par une conduite de retour (10), une valve de sortie (11) à actionnement électromagnétique, qui est insérée dans la conduite de retour (10) et qui, dans sa position de repos, bloque la conduite de retour (10) et, dans sa position de commutation, libère la conduite de retour (10), une valve d'étranglement (8), qui est montée dans la conduite de freinage (6) et comporte deux positions de commutation, une liaison non étranglée existant dans la première position de commutation entre le frein de roue et le maître-cylindre de frein (1), tandis qu'une position étranglée existe dans la seconde position de commutation entre le frein de roue et le maître-cylindre de frein (1), une pompe (13), qui aspire de l'agent de pression à partir de l'accumulateur d'agent de pression (4) et le refoule dans le maître-cylindre de frein (1) par une conduite de refoulement (14), un capteur, servant à détecter la vitesse angulaire de la roue à freiner, et une unité électronique d'exploitation qui exploite le signal du capteur et produit des signaux de commutation destinés à l'entraînement de la pompe et à la valve de sortie (11), caractérisé en ce qu'il est associé à la valve d'étranglement (8) un organe de commutation (20) qui réagit à une variation de pression sur le frein de roue (42) et fait changer la valve d'étranglement (8) de position.

2. Système de freinage suivant la revendication 1, caractérisé en ce que l'organe de changement de position (20) comprend une tige d'actionnement (21) sur laquelle est réalisé un premier piston de séparation (22) qui divise un boîtier en deux chambres (24, 25), une pression s'exerçant dans l'une des chambres (première chambre de commutation 24) faisant passer la valve d'étranglement (8) dans la seconde position II et une pression s'exerçant dans l'autre chambre (chambre de rappel 25) amenant la valve d'étranglement dans la première position I.

3. Système de freinage suivant la revendication 2, caractérisé en ce que la chambre de rappel (25) communique sans étranglement avec le frein de roue (42) et la première chambre de commutation (24) est raccordée au frein de roue (42) par l'intermédiaire d'un étranglement(48).

4. Système de freinage suivant l'une des revendications 1, 2 ou 3, caractérisé en ce que la valve d'étranglement (8) est raccordée à la sortie de la pompe (13) au moyen d'une conduite de commande (19), de sorte que la pression à la sortie de la pompe (13) fait passer la valve d'étranglement (8) de la première à la seconde position de commutation.

5. Système de freinage suivant la revendication 4, caractérisé en ce que, sur la tige d'actionnement (21), il est disposé un second piston de séparation (23) qui limite une seconde chambre de commutation (26) reliée à la sortie de la pompe, de sorte que lorsque la seconde chambre de commutation est soumise à l'action d'une pression, la valve d'étranglement (8) passe dans la seconde position de commutation II.

6. Système de freinage suivant la revendication 1, caractérisé en ce qu'une valve antiretour (9), qui est ouverte vers le maître-cylindre de frein (1), est montée en parallèle à la valve d'étranglement (8).

7. Système de freinage suivant l'une des revendications précédentes, caractérisé en ce que l'accumulateur d'agent de pression est un réservoir de stockage (4) qui est ouvert à l'atmosphère et qui communique avec la chambre de travail du maître-cylindre lorsque le maître-cylindre n'est pas actionné.

8. Système de freinage suivant l'une des revendications précédentes, caractérisé en ce que le système de freinage est agencé suivant deux circuits, les freins de roues de roues diagonalement opposées sur le véhicule étant respectivement associés à chaque circuit de freinage et chaque circuit de freinage comprenant une pompe (12, 13).

9. Système de freinage suivant la revendication 8, caractérisé en ce que les pompes (12, 13) son entraînées par un moteur M commun.

10. Système de freinage suivant la revendication 1, caractérisé en ce que la pompe est une pompe à piston alternatif (12, 13) dont le piston de pompe est entraîné par un excentrique (52), le piston de pompe étant maintenu en permanence en appui sur l'excentrique (52).

11. Système de freinage suivant l'une des revendications précédentes, caractérisé en ce que la valve à étranglement (8) comprend un piston étagé (33) qui est guidé dans un alésage étagé (31, 32) correspondant, le piston étagé (33) comprenant dans sa partie centrale une section (35) qui est agencée de façon à pouvoir être guidée dans la partie (32) de plus petit diamètre de l'alésage étagé, tandis que l'espace situé entre la section de piston étagé (35) et la paroi de la partie (32) de plus petit diamètre réalise l'étranglement du flux d'agent de pression.

12. Système de freinage suivant l'une des revendications précédentes, caractérisé en ce que la conduite de freinage (6, 7) est agencée de façon à pouvoir être bloquée (valve ASR 60, 61) entre le point où la conduite de pression (14) débouche dans la conduite de freinage et le maître-cylindre de frein (1).

13. Système de freinage suivant la revendication 12, caractérisé en ce que, dans le cas d'un système de freinage dans lequel, dans un circuit de freinage, les freins de la roue motrice et de la roue non motrice sont réunis, la conduite de freinage menant à la roue non motrice comporte une dérivation entre la valve ASR (60, 61) et le maître-cylindre de frein (1).

14. Système hydraulique de freinage à régulation du glissement de traction et régulation du glissement de freinage, notamment pour véhicule automobile, comprenant un maître-cylindre de frein (1), un réservoir de stockage (4), au moins un frein de roue, qui est relié au maître-cylindre de frein (1) par une conduite de pression principale (6) et au réservoir de stockage (4) par une conduite de retour (10), une valve d'étranglement (8) associée au frein de roue et une valve de sortie (11) à actionnement électromagnétique, qui est insérée dans la conduite de retour (10) et qui, dans sa position de repos, bloque la conduite de retour (10) et, dans sa position de commutation, libère la conduite de retour (10), une pompe (12), qui aspire de l'agent de pression à partir du réservoir de stockage (4) et refoule cet agent de pression dans le maître-cylindre de frein (1) par une conduite de refoulement (14), un capteur, servant à détecter la vitesse angulaire de la roue à freiner, et une unité électronique d'exploitation qui exploite le signal du capteur et produit des signaux de commutation destinés à l'entraînement de la pompe et à la valve de sortie, la pression de freinage de roue agissant sur la valve d'étranglement (8) lorsque la valve de sortie (11) est ouverte, de sorte que la pression de freinage de roue provoque un changement hydraulique de position de la valve d'étranglement (8), caractérisé en ce qu'un étranglement (93) est associé à la valve de sortie (11) suivant un montage en série dans la conduite de retour (10), I'étranglement (93) déterminant la phase suivant laquelle s'effectue dans le temps la commande du passage de la valve d'étranglement (8) dans la position de base sans étranglement.

15. Système de freinage suivant la revendication 14, caractérisé en ce qu'une valve antiretour (94) s'ouvrant en direction de la conduite de retour (10) est montée en aval de la valve de sortie (11).

16. Système de freinage suivant la revendication 15, caractérisé en ce que la valve antiretour (94) constitue avec l'étranglement (93), suivant un montage en parallèle l'un vis-à-vis de l'autre, une valve de surpression formant une unité structurelle.

17. Système de freinage suivant la revendication 15, caractérisé en ce que, lorsque la valve de sortie (11) est fermée, la valve d'étranglement (8) disposée entre le frein de roue (42) et le maître-cylindre de frein (1) maintient la conduite de freinage (6) ouverte et bloque la conduite de retour (10) sur laquelle est montée la valve de sortie (11).

18. Système de freinage suivant la revendication 17, caractérisé en ce que, dans la position hydraulique de commutation provoquée par la pression de freinage de roue, la valve d'étranglement (8) assure un étranglement du flux volumique dans la conduite de freinage (6) et libère le passage du flux en retour dans la conduite de retour (10), de la valve de sortie (11) au réservoir de stockage (4).

19. Système de freinage suivant la revendication 18, caractérisé en ce que la valve d'étranglement (8) est agencée sous la forme d'une valve à 4 voies/2 positions qui, de préférence au moyen d'une force élastique, reste dans sa position de base libérant la conduite de freinage (6), tandis que le retour vers le réservoir de stockage (4) est fermé.

20. Système de freinage suivant la revendication 14, caractérisé en ce que la conduite de commande (81) servant à la manoeuvre de la valve d'étranglement (8) est disposée en dérivation sur la conduite de retour (10) entre l'étranglement (93) et la valve de sortie (11).

21. Système de freinage suivant la revendication 14, caractérisé en ce qu'une valve à deux positions (96), soumise à l'action de la pression du maître-cylindre de frein (1) et de la pompe (12) et comportant un corps anti-retour, est montée en aval de la valve de sortie (11).
